# EUROPÄISCHE PATENTSCHRIFT

(11) **EP 3 208 587 B1**
(45) Veröffentlichungstag und Bekanntmachung des Hinweises auf die Patenterteilung: **24.10.2018**
(21) Anmeldenummer: 16156296.2
(22) Anmeldetag: 18.02.2016
(51) Int. Cl.: G01K 13/10, G01F 23/00, G01F 23/26

(54) **LEITUNGSGEBUNDENER SENSOR**
WIRED SENSOR
CAPTEUR RACCORDE

(43) Veröffentlichungstag der Anmeldung: 23.08.2017
(73) Patentinhaber: Rechner Industrie-Elektronik GmbH, 68623 Lampertheim (DE)
(72) Erfinder: Gebhardt, Dr., Stefan, 68623 Lampertheim (DE); Kohler, Dr.-Ing., Armin, 68623 Lampertheim (DE); Bischler, Eduard, 68623 Lampertheim (DE); Sünkeler, Martin, 23968 Proseken (DE); Steinbach, Stefan, 68642 Bürstadt (DE); Pollakowski, Jürgen, 33605 Bielefeld (DE)
(74) Vertreter: Blumbach · Zinngrebe Patent- und Rechtsanwälte

(56) Entgegenhaltungen:
- DE-A1-102014 102 313
- US-A- 5 907 112

## Beschreibung

Die vorliegende Erfindung betrifft einen leitungsgebundenen Sensor, insbesondere zur Temperatur- und/oder Feuchtigkeitserfassung sowie zur Füllstandserfassung. Die Erfindung betrifft ferner ein Verfahren zur Herstellung eines solchen Sensors.

Bekanntermaßen kommen bei der Lagerung und Bevorratung von Schüttgütern, wie z.B. Saatgut oder Futtermittel, aber auch Kohle, Sand, Mehl etc., und auch liquiden Materialien, insbesondere in Behältern oder Silos, häufig leitungsgebundene Sensoren in Einsatz, welche die Temperatur, ggf. auch die Feuchtigkeit, und/oder den Füllstand des Schüttgutes bzw. liquiden Materials detektieren. Die Sensoren besitzen hierbei zur Detektion je nach Ausführung passive oder auch aktive Messfühler, wobei die aktiven Messfühler keine elektrische Hilfsenergie zur Erzeugung eines elektrischen Signals benötigen, passive Messfühler hingegen sehr wohl. Auch die Art und Weise des mittels der Messfühler angewandten Messprinzips kann hierbei vielfältig sein, wobei häufig kapazitive oder elektromagnetische Messprinzipien angewandt und die Messfühler entsprechend angepasst sind.

In der Regel umfassen derartige leitungsgebundene Sensoren zur Befestigung an einer Decke oder einer Wand, ein Anschlussgehäuse und einen Messkanal, wobei sich der Messkanal mit einer länglichen Ausdehnung aus diesem Anschlussgehäuse heraus erstreckt, und zwar von einem ersten, in dem Anschlussgehäuse aufgenommenen Ende entlang der länglichen Ausdehnung in Richtung des anderen Endes.

Der Messkanal umfasst hierbei ferner in der Regel eine rohr- oder schlauchartige, elektrisch isolierende Ummantelung, bspw. aus Kunststoff oder Gummi, mit wenigstens einer in dieser Ummantelung eingebetteten Leitung aus elektrisch leitfähigem Material, die sich entlang der länglichen Ausdehnung des Messkanals erstreckt. Eine solche Leitung kann bspw. in Art einer Folie, einer Litze, eines Bandes oder eines Strangs ausgebildet sein. Eine solche Leitung kann z.B. auch aus einer Vielzahl von Stahldrähten oder auch in Art eines Drahtgeflechts ausgebildet sein, insbesondere um eine höhere Druck- oder Zugfestigkeit der rohr- oder schlauchartigen Ummantelung bereitzustellen. Zur Überwachung der Temperatur und/oder der Feuchtigkeit des Füllgutes, also des Schüttgutes oder liquiden Materials, befinden sich im Inneren der rohr- oder schlauchartigen Ummantelung in der Regel in vorbestimmten Abständen zueinander eine Mehrzahl von Temperatur- bzw. Feuchtigkeits-Messfühlern, bspw. passive Messfühler. Diese Temperatur- und/oder Feuchtigkeits-Messfühler sind ferner in der Regel über mindestens eine elektrisch leitfähige Leitung mit einer dem Sensor zugeordneten Auswerteelektronik verbunden bzw. zu verbinden. Die Auswerteelektronik kann hierbei einen Teil des Sensors bilden und also insbesondere innerhalb des Anschlussgehäuses angeordnet sein oder auch eine in Bezug auf den Sensor externe Komponente sein, insbesondere auch eine entfernt externe Komponente sein, d.h. eine Komponente, die bspw. irgendwo entfernt vom Sensor und gegebenenfalls auch außerhalb vom Behälter oder Silo angeordnet ist.

Zur Befestigung solcher leitungsgebundenen Sensoren an einer Decke oder einer Wand kann am Sensor, insbesondere am Anschlussgehäuse, eine Befestigungseinrichtung ausgebildet und bspw. derart angepasst sein, dass das Anschlussgehäuse im Innern eines Behälters oder Silos an der Decke oder einer Wand befestigt, z.B. angeschraubt werden kann. Die Befestigungseinrichtung kann allerdings auch derart angepasst sein, dass das Anschlussgehäuse außerhalb des Behälters oder Silos angeordnet ist und sich der Messkanal des Sensors durch das Dach oder eine Wand hindurch in das Innere erstreckt.

Üblicherweise sind ferner das Anschlussgehäuse sowie die Decke und Wände von Behältern, bei welchen derartige leitungsgebundene Sensoren eingesetzt werden, metallisch oder aus einem anderweitigen elektrisch leitfähigen Material.

Ein solcher leitungsgebundener Sensor ist bspw. der DE 10 2014 102 313 A1 zu entnehmen. Der dort beschriebene Sensor besitzt Temperatur-Messfühler und Feuchtigkeits-Messfühler, die im Inneren der rohr- oder schlauchartigen, elektrisch isolierenden Ummantelung angeordnet sind und jeweils mit einer Auswerteelektronik verbunden sind, welche gemäß der dort beschriebenen Ausführung sowohl zur Auswertung der Temperatur und der Feuchtigkeit ausgebildet ist. Bei der dort beschriebenen Ausführung ist ferner die isolierende Ummantelung bspw. aus Polyvinylidenfluorid (PVDF), Teflon, Polypropylen (PP), Ethylen-Propylen-Dien (EPDM) oder Polyetherketon (PEK). Zusätzlich ist bei der dort beschriebenen Ausführung die in der rohr- oder schlauchartigen isolierenden Ummantelung eingebettete Leitung in Art von einer Vielzahl von Stahldrähten ausgebildet und gleichermaßen mit der Auswerteelektronik elektrisch verbunden. Die in der Ummantelung eingebettete Leitung kann somit in Folge zur Füllstandserfassung eingesetzt werden, wobei die eingebettete Leitung in diesem Fall als Anode oder Katode dient.

Gemäß der DE 10 2014 102 313 A1 ist die gesamte Auswerteelektronik im Anschlussgehäuse untergebracht, wobei im Boden des Gehäuses eine Basis angeordnet ist, die ein Loch aufweist, durch welches sich der Messkanal ausgehend von einem ersten, in dem Gehäuse aufgenommenen Ende aus dem Gehäuse heraus erstreckt. Der Boden umfasst eine Isolierhülse, die sich oberhalb und unterhalb des Lochs erstreckt und das Gehäuse nach innen sowohl gegenüber der Basis als auch gegenüber dem Messkanal vollständig elektrisch isoliert. Durch einen insgesamt sehr komplexen Aufbau wird somit gewährleistet, dass zwischen dem Anschlussgehäuse und den zur Messung eingesetzten elektrisch leitfähigen Leitungen kein elektrischer Kontakt gegeben ist.

US 5,907,112 offenbart einen kapazitiven Füllstandmesser für einen Prozessbehälter.

Eine Aufgabe der Erfindung ist es gegenüber dem Stand der Technik einen einfacher aufgebauten leitungsgebundenen Sensor bereitzustellen, der zur Temperatur- und/oder Feuchtigkeitserfassung sowie zur Füllstandserfassung des Füllgutes ausgebildet ist und der zweckmäßigerweise auch durch einen einfachen Umbau eines bereits vorhandenen, zur Temperatur- und/oder Feuchtigkeitserfassung jedoch noch nicht zur Füllstandserfassung ausgebildeten leitungsgebunden Sensors herstellbar ist.

Die Lösung der Aufgabe ist durch einen leitungsgebundenen Sensor mit den Merkmalen des anhängigen Anspruchs 1 sowie durch ein Verfahren mit den Merkmalen des anhängigen Anspruchs 9 gegeben.

Die Erfindung schlägt folglich zur Lösung der Aufgabe vor, einen gattungsbildenden Sensor gemäß Oberbegriff des Anspruchs 1 derart weiterzubilden, dass an dem Sensor eine elektrische Isolatoreinrichtung angeordnet ist, welche die eingebettete Leitung und das Anschlussgehäuse insgesamt, gegenüber der Decke oder Wand, an welcher der Sensor befestigbar ist, elektrisch isoliert. In einer zweckmäßigen Weiterbildung ist ferner vorgesehen,
dass im Falle einer elektrisch leitfähigen Wand oder Decke, an welcher der Sensor befestigbar ist, das Potential der Wand oder Decke als Bezugspotential für die Füllstands-Auswerteelektronik diese Wand oder Decke verwendbar ist, d.h. durch entsprechende elektrische Kontaktierung der Füllstands-Auswerteelektronik mit dieser Wand oder Decke, oder,
dass insbesondere für den Fall, dass diese Wand oder Decke nicht elektrisch leitfähig ist, eine Hilfselektrode bereitgestellt ist, an welche ein Potential angelegt werden kann, welches durch elektrische Kontaktierung mit der Füllstands-Auswerteelektronik als Bezugspotential für die Füllstands-Auswerteelektronik verwendbar ist.

Die Erfindung schlägt folglich ferner ein Verfahren zur Herstellung eines solchen leitungsgebundenen Sensors vor. Aufbauend auf einem leitungsgebundenen Sensor zur Befestigung an einer Decke oder einer Wand, insbesondere eines Silos oder eines Behälters, und unter Verwendung dieses Sensors, der ein Anschlussgehäuses und einen Messkanal mit einer länglichen Ausdehnung mit zwei Enden besitzt, von denen ein erstes Ende in dem Anschlussgehäuse aufgenommen ist und sich der Messkanal ausgehend von dem ersten Ende in Richtung des anderen Endes der länglichen Ausdehnung aus dem Gehäuse heraus erstreckt, und wobei der Messkanal eine rohr- oder schlauchartige, elektrisch isolierende Ummantelung mit wenigstens einer in dieser eingebetteten Leitung aus elektrisch leitfähigem Material umfasst, die sich entlang der länglichen Ausdehnung des Messkanals erstreckt, und wobei im Innern der rohr- oder schlauchartigen Ummantelung eine Mehrzahl von Temperatur- und/oder Feuchtigkeits-Messfühlern in vorbestimmten Abständen zueinander angeordnet ist, wobei diese Mehrzahl von Temperatur- bzw. Feuchtigkeits-Messfühlern über mindestens eine elektrisch leitfähige Leitung mit einer dem Sensor zugeordneten Auswerteelektronik zu verbinden ist oder verbunden ist, sind hierbei folgende Schritte vorgesehen:
- Elektrisches Isolieren der eingebetteten Leitung und des Anschlussgehäuses insgesamt, gegenüber der Decke oder Wand, an welcher der Sensor zu befestigen ist oder befestigt ist;
- Herstellen einer elektrischen Verbindung zwischen der wenigstens einen eingebetteten Leitung und der oder einer weiteren, dem Sensor zugeordneten Auswerteelektronik zur Auswertung des Füllstandes.

In einer zweckmäßigen Weiterbildung ist ferner vorgesehen:
- Herstellen einer elektrischen Verbindung zwischen der Wand oder Decke, an welcher der Sensor zu befestigen ist oder befestigt ist, und der zur Auswertung des Füllstandes eingesetzten Auswerteelektronik zur Verwendung des Potentials dieser Wand oder Decke als Bezugspotential für die Auswertung des Füllstandes oder
- Bereitstellen einer Hilfselektrode, an welche ein Potential angelegt werden kann, zur Verwendung dieses Potentials als Bezugspotential für die Auswerteelektronik durch Herstellen einer elektrischen Verbindung zwischen der Hilfselektrode und der Füllstands-Auswerteelektronik. Wesentliche Vorteile sind somit darin zu sehen, dass auch leitungsgebundene Sensoren eingesetzt werden können, bei denen die in der rohr- oder schlauchartigen Ummantelung eingebettete wenigstens eine elektrisch leitfähige Leitung elektrischen Kontakt zum Anschlussgehäuse besitzt. Ein Sensor gemäß der Erfindung benötigt folglich keinen komplex gestalteten inneren Gehäuseaufbau mit einer darin aufgenommen und der Gehäusegeometrie angepassten Isolationshülse. Um hierauf basierend einen solchen Sensor mit Temperatur- und/oder Feuchtigkeits-Messfühlern parallel zur Temperaturmessung bzw. Feuchtigkeitsmessung auch zur Füllstandsmessung betreiben zu können, ist lediglich dafür zu sorgen, dass die eingebettete Leitung und das Anschlussgehäuse insgesamt, elektrisch von der Decke oder Wand an welcher der Sensor befestigbar ist, isoliert ist. Eine solche, das Anschlussgehäuse insgesamt isolierende Isolierung ist in der Regel durch einfache Nachrüstung möglich, bspw. indem ein einfach gestaltetes isolierendes Einbauteil, wie bspw. eine Kunststoffhülse oder -platte, zwischen das Anschlussgehäuse und Decke oder Wand fixiert wird. Daraufhin kann die wenigstens eine eingebettete Leitung als Messelektrode benutzt werden, indem zu dieser einfach, insbesondere von außen durch das Anschlussgehäuse kommend, eine elektrische Verbindung mit einer Füllstands-Auswerteelektronik hergestellt wird. Besteht zwischen der eingebetteten Leitung und dem Anschlussgehäuse bereits elektrischer Kontakt reicht es darüber hinaus aus, das Anschlussgehäuse, insbesondere wenn es sich um ein metallisches Gehäuse handelt, elektrisch zu kontaktieren. Insbesondere im Fall einer Füllstandsmessung nach einem kapazitiven Messprinzip, kann als Bezugspotenzial für die Auswerteelektronik daraufhin durch elektrische Kontaktierung der Decke bzw. der Wand deren Potential genutzt werden, so dass die Füllstanderfassung zwischen der wenigstens einen eingebetteten Leitung und der Wand bzw. Decke erfolgen kann. Alternativ kann insbesondere für den Fall, dass die Decke und Wand nicht elektrisch leitend, einfach eine Hilfselektrode, an welche ein Potential angelegt werden kann, zur Verwendung dieses Potentials als Bezugspotential für die Füllstands-Auswerteelektronik bereitgestellt und eine elektrische Verbindung zwischen der Hilfselektrode und der Füllstands-Auswerteelektronik hergestellt werden.

Folglich sind auch bereits vorhandene, die Temperatur und/oder Feuchtigkeit eines Füllgutes erfassende leitungsgebundene Sensoren auf einfache Weise umbaubar bzw. nachrüstbar, ohne dass eine Neuinstallation im Falle einer zusätzlich gewünschten oder erforderlichen

Füllstandserfassung notwendig ist. Die Temperatur- und/oder Feuchtigkeits-Messfühler können hierbei vorteilhafter Weise in Reihen- oder Parallelschaltung mit der Auswerteelektronik verbindbar sein. Auch kann die Auswerteelektronik abgesetzt zum Sensor angeordnet sein. Je nach spezieller Ausführung kann schließlich ein wetterfestes, wasserdichtes und/oder mechanisch robustes Gehäuse über dieses Anschlussgehäuse und/oder die Auswerteelektronik angebracht sein, damit das Messergebnis durch Witterungseinflüsse ohne signifikante Beeinflussung bleibt.

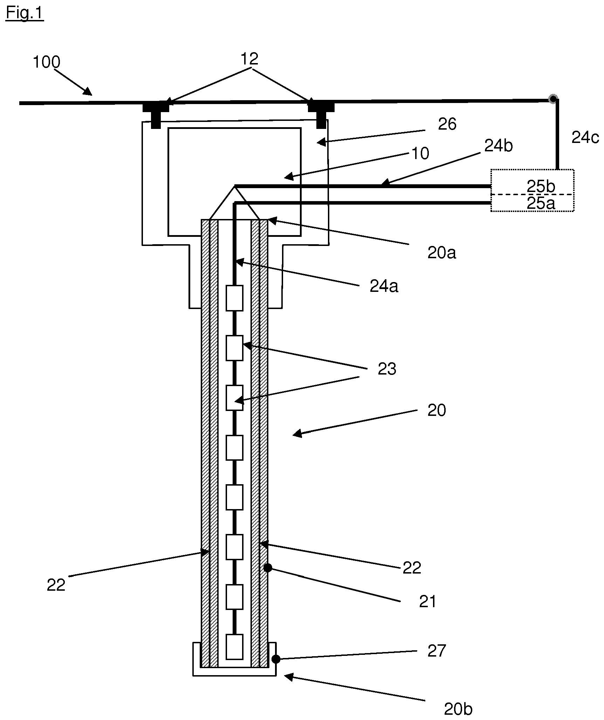

Weitere Vorteile und Merkmale der Erfindung ergeben sich aus der nachfolgenden Beschreibung anhand einiger beispielhafter, jedoch bevorzugter Ausführungsformen wobei auf die beigefügten Zeichnungen Bezug genommen wird. In den Zeichnungen zeigen die Figuren 1 bis 4 verschiedene Aspekte anhand unterschiedlicher Ausführungsformen.

Die Fig. 1 bis 4 zeigen stark vereinfacht Ansichten, teilweise auch geschnitten, von unterschiedlichen Ausführungsformen leitungsgebundener Sensoren im Rahmen der Erfindung. Alle Sensoren sind vorteilhafter Weise zur Befestigung an einer Decke 100 oder einer Wand, insbesondere eines Silos oder eines Behälters, vorgesehen.

Die dargestellten Sensoren besitzen jeweils ein Anschlussgehäuse 10 und einen Messkanal 20, der eine längliche Ausdehnung mit zwei Enden bzw. Endbereichen 20a und 20b besitzt. Ein erstes Ende 20a bzw. der dieses Ende umfassende Endbereich des Messkanals ist in dem Anschlussgehäuse 10 aufgenommen, insbesondere dort auf geeignete Art befestigt. Die Art der Befestigung ist für die Erfindung grundsätzlich nicht wesentlich und kann auf vielfältige, dem Fachmann an und für sich bekannte Weise durchgeführt werden. Ausgehend von dem im Anschlussgehäuse 10 aufgenommenen Ende 20a erstreckt sich der Messkanal 20 in Richtung des anderen Endes 20b der länglichen Ausdehnung aus dem Anschlussgehäuse heraus. Der Messkanal 20 kann hierbei im Rahmen der Erfindung frei hängen, basierend auf den Figuren 1 bis 4 insbesondere in vertikaler Richtung, kann aber auch in Abwandlung horizontal geführt sein und/oder muss nicht straff sein, insbesondere nicht über das andere Ende 20b fixiert und/oder gespannt sein.

Wie insbesondere den Figuren 1 bis 3 zu entnehmen, die eine teilweise geschnittene Ansicht insbesondere auch des Messkanals 20 zeigen, umfasst der Messkanal 20 eine rohr- oder schlauchartige, elektrisch isolierende Ummantelung 21, in welcher wenigstens eine Leitung 22 aus elektrisch leitfähigem Material eingebettet ist und die sich entlang der länglichen Ausdehnung des Messkanals erstreckt. Die äußere Ummantelung 21 des Messkanals kann hierbei z.B. aus Gummi oder einem Kunststoff sein, z.B. auch aus einem der zuvor in Bezug auf die DE 10 2014 102 313 A1 aufgeführten Materialien. Die eingebettete Leitung 22 kann bspw. in Art einer Folie, einer Litze, eines Bandes oder eines Strangs ausgebildet sein und/oder kann z.B. auch aus einer Vielzahl von Stahldrähten oder auch in Art eines Drahtgeflechts ausgebildet sein, insbesondere um eine höhere Druck- oder Zugfestigkeit der rohr- oder schlauchartigen Ummantelung bereitzustellen.

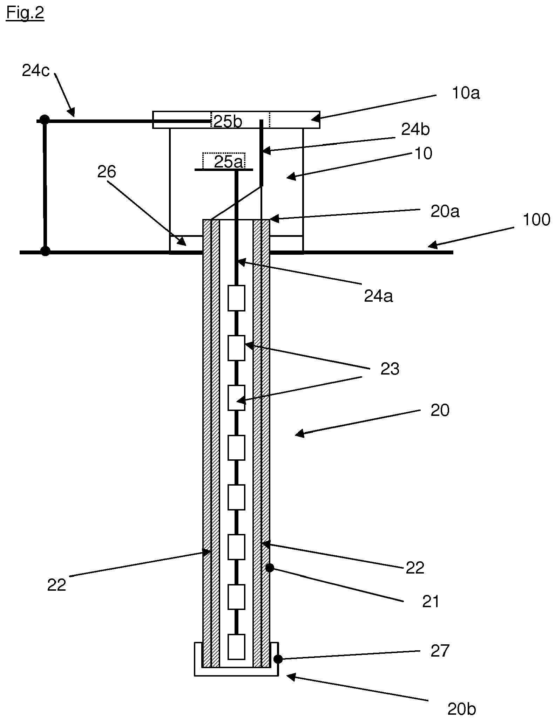

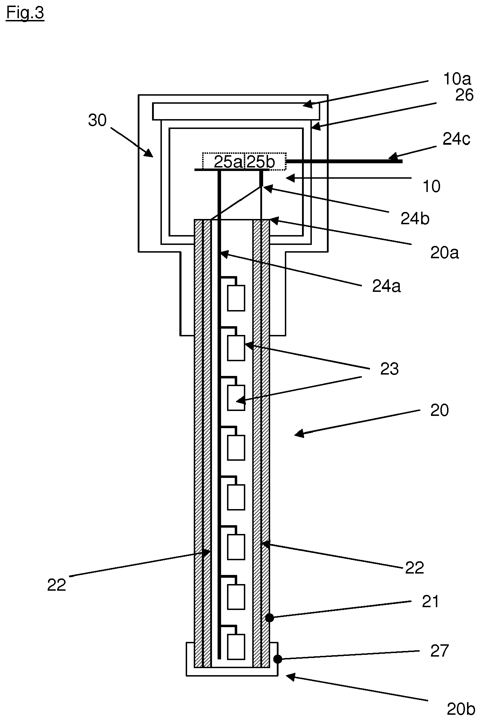

Im Inneren der rohr- oder schlauchartigen Ummantelung 21, d.h. in dem von der Ummantelung 21 umgebenen Raum, ist eine Mehrzahl von Temperatur- und/oder Feuchtigkeits-Messfühlern 23 in vorbestimmten Abständen zueinander entlang der länglichen Ausdehnung angeordnet. Solche Temperatur- und/oder Feuchtigkeits-Messfühler 23 können bevorzugt passiver Art sein. Diese Mehrzahl von Temperatur- und/oder Feuchtigkeits-Messfühler 23 sind über mindestens eine elektrisch leitfähige Leitung 24 mit einer jeweiligen dem Sensor zugeordneten Auswerteelektronik 25a zur Auswertung der Temperatur und/oder der Feuchtigkeit zu verbinden oder bereits verbunden, wie z.B. den Figuren 1 bis 3 zu entnehmen. Bei den Figuren 1 und 2 ist diese Mehrzahl von Temperatur- und/oder Feuchtigkeits-Messfühler 23 gemäß einer bevorzugten Ausführung in Reihenschaltung mit der Auswerteelektronik 25a wohingegen bei Figur 3 diese Mehrzahl von Temperatur- und/oder Feuchtigkeits-Messfühler 23 gemäß einer alternativen bevorzugten Ausführung in Parallelschaltung mit der Auswerteelektronik 25a zu verbinden bzw. bereits verbunden ist. Es sei darauf hingewiesen, dass die in den Figuren 1 bis 3 dargestellten Messfühler 23 je nach spezifischer Ausführung auch nur als Temperatur-Messfühler oder nur als Feuchtigkeits-Messfühler ausgebildet sein können. Sollen dann jedoch sowohl die Temperatur und die Feuchtigkeit des Füllgutes erfasst werden, können z.B. jeweils eine erste Mehrzahl von Temperatur- Messfühlern und jeweils eine zweite Mehrzahl von Temperatur- Messfühler Feuchtigkeits-Messfühlern in jeweils vorbestimmten Abständen zueinander entlang der länglichen Ausdehnung angeordnet und über entsprechende elektrisch leitfähige Leitungen mit einer Auswerteelektronik zur Auswertung der Temperatur bzw. der Feuchtigkeit verbunden werden. Alternativ können die in den Figuren 1 bis 3 dargestellten Messfühler 23 auch ausgebildet sein, sowohl als Temperatur-Messfühler und als Feuchtigkeits-Messfühler zu fungieren. Je nach spezifischer Ausführung ist also die Auswerteelektronik 25a zur Auswertung der Temperatur und/oder der Feuchtigkeit ausgebildet bzw. kann die Auswerteelektronik 25a auch entsprechend separate Auswerteelektronikkomponenten umfassen.

Die in der Ummantelung eingebettete Leitung 22 ist ferner gemäß der Erfindung zur Auswertung des Füllstandes ebenfalls elektrisch leitend mit der oder einer weiteren, dem Sensor zugeordneten Auswerteelektronik 25b verbindbar wie z.B. den Figuren 1 bis 3 zu entnehmen. Die Auswerteelektronik 25b und die Auswerteelektronik 25a können somit Teile einer gemeinsamen Auswerteelektronik sein oder jeweils eine physisch separate Auswerteelektronik bilden.

Wie den Figuren 1 bis 3 ferner zu entnehmen, kann die Auswerteelektronik zur Auswertung der Temperatur und/oder der Feuchtigkeit 25a und/oder die Auswerteelektronik 25b zur Auswertung des Füllstandes einen Teil des Sensors bilden, wobei die Elektronik in diesem Fall insbesondere innerhalb des Anschlussgehäuses 10 oder zumindest teilweise in einem an dem Anschlussgehäuse 10 angeordneten Zusatzgehäuse 10a, z.B. auch mit Funktion eines Deckels, untergebracht sein kann. Die Auswerteelektronik 25a und/oder die Auswerteelektronik 25b kann jedoch auch eine in Bezug auf den Sensor externe Komponente sein (vgl. Fig. 1). Je nach spezifischer Ausführung des Sensors und insbesondere dessen Befestigung an der Wand oder Decke 100 eines Behälters oder Silos kann insbesondere die Auswerteelektronik 25b in weiterer Abwandlung zu den Figuren 1 bis 3 auch außerhalb des Behälters oder Silos angeordnet sein.

Die für eine Auswertung des Füllstandes im Rahmen der Erfindung erforderliche elektrische Kontaktierung der eingebetteten Leitung 22, um diese elektrisch leitend mit der Auswerteelektronik 25b zu verbinden, kann insbesondere bei Nachrüstung bzw. Umbau eines Sensors, der zunächst nur für eine Temperatur- und/oder Feuchtigkeitserfassung ausgebildet war, z.B. dadurch erfolgen, dass in das Anschlussgehäuse eine in den Figuren aus Gründen der Übersichtlichkeit nicht näher dargestellte Öffnung eingebracht wird, beispielsweise eine Bohrung, durch welche eine elektrisch leitfähige Verbindung zur eingebetteten Leitung 22 hergestellt wird, über welche diese wiederum elektrisch leitend mit der Auswerteelektronik 25b verbindbar ist.

Die Erfindung sieht ferner vor, dass an dem Sensor eine elektrische Isolatoreinrichtung angeordnet ist oder wird, welche die eingebettete Leitung 22 gegenüber der Decke oder Wand, an welcher der Sensor zu befestigen ist oder befestigt ist, elektrisch isoliert.

Erfindungsgemäß ist hierzu an dem Sensor eine elektrische Isolatoreinrichtung 26 angeordnet, welche das Anschlussgehäuse 10 insgesamt gegenüber der Decke oder Wand elektrisch isoliert. Eine solche Isolatoreinrichtung 26 kann folglich unabhängig vom inneren Aufbau des Sensors auf einfachste Weise nachgerüstet werden z.B. bei Ausbildung der Isolatoreinrichtung 26 in Form eines das Anschlussgehäuse 10 umgebenden Isolatorgehäuses (vgl. Fig. 1, 3 oder 4) oder in Form einer zwischen Anschlussgehäuse 10 und der Wand oder Decke 100 angeordneten Isolatorplatte (vgl. Fig. 2).

Ist die Befestigung des Sensors derart, dass das Anschlussgehäuse außerhalb des Behälters oder Silos angeordnet ist und sich der Messkanal des Sensors durch das Dach oder eine Wand in das Innere erstreckt, kann eine solche Isolatoreinrichtung 26 ferner eine Hülse ausbilden, durch welche der Messkanal 20 in das Innere des Behälters oder Silos geführt wird (vgl. Fig. 2). Wird eine solche oder ähnlich gestaltete Isolatoreinrichtung 26 an oder in der Decke oder Wand gehalten, insbesondere fixiert, kann diese somit auch gleichzeitig als Befestigungseinrichtung zur Befestigung des Sensors insgesamt fungieren.

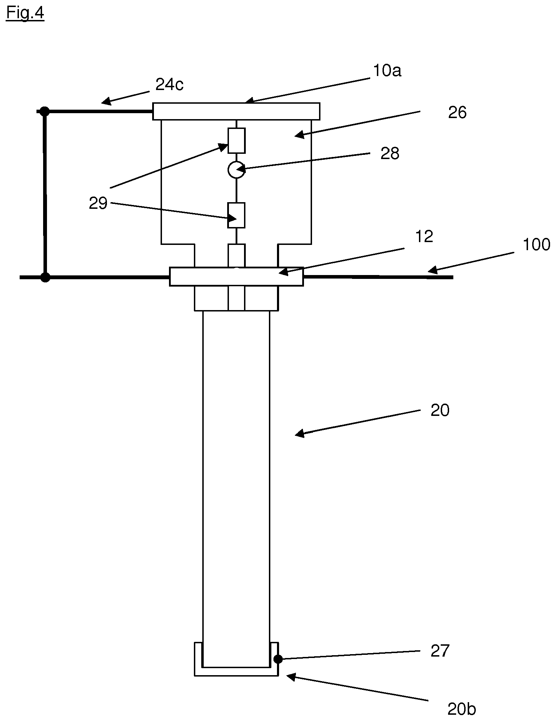

Insbesondere, wenn die Isolatoreinrichtung 26 in Form eines das Anschlussgehäuse 10 umgebenden Isolatorgehäuses ausgeführt ist und das Anschlussgehäuse außerhalb des Behälters oder Silos ist, z.B. wie bei Figur 4, kann in diesem Fall beispielsweise eine separate Befestigungseinrichtung 12 ebenfalls mit einer Hülse vorgesehen sein, die an oder in der Decke oder Wand gehalten, insbesondere fixiert ist, und durch welche sich zumindest der Messkanal des Sensors durch das Dach oder eine Wand in das Innere erstrecken kann. Die Hülse kann bspw. Teil einer Anschraubplatte sein, die am Dach oder der Wand montiert ist. Auch ein Bereich des Anschlussgehäuses und/oder eines das Anschlussgehäuse 10 umgebenden Isolatorgehäuses kann von der Hülse aufgenommen werden bzw. sein. Ist bzw. wird der Sensor derart an der Wand oder Decke 100 befestigt, dass sich das Anschlussgehäuse innerhalb des Behälters oder Silos l befindet, z.B. wie bei Figur 1, kann in diesem Fall eine Befestigungseinrichtung 12 beispielsweise am Isolatorgehäuse angebracht sein, mittels welcher der Sensor wiederum an der Wand oder Decke 100 befestigbar ist. Eine solche Befestigungseinrichtung 12 kann z.B. eine Art Anschraubhalterung sein. Eine das Anschlussgehäuse 10 als Isolatorgehäuse umschließende Isolatoreinrichtung kann beispielsweise aus zwei aus einem geeigneten Kunststoff oder Gummi gefertigte Halbschalen gebildet sein, welche über eine Montageeinrichtung 29, z.B. Montageclips, miteinander verbunden und aneinander fixiert gehalten werden (vgl. Figur 4).

Ist die Isolatoreinrichtung 26 an dem Sensor angeordnet, so dass das Anschlussgehäuse 10 insgesamt gegenüber der Decke oder Wand elektrisch isoliert ist hat dies den Vorteil, dass bei Nutzung eines leitungsgebundenen Sensors mit vorliegender elektrisch leitfähiger Kontaktierung zwischen der eingebetteten Leitung 22 und dem Anschlussgehäuse 10 die elektrisch leitfähige Verbindung zur eingebetteten Leitung 22 bereits durch entsprechende Kontaktierung des Anschlussgehäuses 10 nachgerüstet werden kann und lediglich das Anschlussgehäuse elektrisch leitend mit der Auswerteelektronik 25b zur Auswertung des Füllstandes zu verbinden ist. Bei einer wie bei Figur 4 in Form eines das Anschlussgehäuse 10 umgebenden Isolatorgehäuses ausgebildeten Isolatoreinrichtung 26 muss folglich lediglich eine durch die Isolatoreinrichtung 26 hindurchführende Durchgangsöffnung 28 vorgesehen werden, durch welche eine entsprechende Kontaktierung möglich wird.

Infolge der elektrischen Isolierung der eingebetteten Leitung 22 und des Anschlussgehäuses insgesamt gegenüber der Wand oder Decke, an welcher der Sensor zu befestigen oder bereits befestigt ist, wird im Falle einer elektrisch leitfähigen Wand oder Decke, diese Wand oder Decke bevorzugt mit der Auswerteelektronik zur Auswertung des Füllstandes elektrisch kontaktiert, und zwar derart, dass das Potential der Wand oder Decke als Bezugspotential für die Auswerteelektronik 25b zur Auswertung des Füllstandes verwendbar ist. In den Figuren 1, 2 und 4 ist eine solche Kontaktierung beispielhaft über eine elektrisch leitfähige Leitung 24c dargestellt. Insbesondere für den Fall, dass die Wand oder Decke jedoch nicht elektrisch leitfähig ist, kann im Rahmen der Erfindung bevorzugt eine Hilfselektrode bereitgestellt werden, an welche ein Potential angelegt werden kann, welches dann alternativ durch elektrische Kontaktierung mit der Auswerteelektronik 25b zur Auswertung des Füllstandes als Bezugspotential für die Auswerteelektronik 25b zur Auswertung des Füllstands verwendbar ist.

Je nach spezieller Ausführung kann ferner noch ein zusätzliches wetterfestes, wasserdichtes und/oder mechanisch robustes Schutzgehäuse über das Anschlussgehäuse und/oder die Auswerteelektronik angebracht werden oder sein, damit das Messergebnis durch Witterungseinflüsse ohne signifikante Beeinflussung bleibt. Ein solches Schutzgehäuse 30 kann hierbei z.B. auch ein Isolatorgehäuse mitumschließen (vgl. Figur 3).

Aufbauend auf einem leitungsgebundenen Sensor zur Befestigung an einer Wand oder Decke 100, insbesondere eines Silos oder eines Behälters, und unter Verwendung dieses Sensors, der ein Anschlussgehäuse 10 und einen Messkanal 20 mit einer länglichen Ausdehnung mit zwei Enden 20a, 20b besitzt, wobei ein erstes Ende 20a des Messkanals 20 in dem Anschlussgehäuse aufgenommen ist, sich der Messkanal 20 ausgehend von dem ersten Ende 20a in Richtung des anderen Endes 20b der länglichen Ausdehnung aus dem Gehäuse heraus erstreckt und der Messkanal 20 eine rohr- oder schlauchartige, elektrisch isolierende Ummantelung 21 mit wenigstens einer in dieser eingebetteten Leitung 22 aus elektrisch leitfähigem Material umfasst, die sich entlang der länglichen Ausdehnung des Messkanals erstreckt, und wobei im Innern der rohr- oder schlauchartigen Ummantelung 21 eine Mehrzahl von Temperatur- und/oder Feuchtigkeits-Messfühlern 23 in vorbestimmten Abständen zueinander angeordnet ist, wobei diese Mehrzahl von Temperatur- bzw. Feuchtigkeits-Messfühlern 23 über mindestens eine elektrisch leitfähige Leitung 24a mit einer dem Sensor zugeordneten Auswerteelektronik 25a zu verbinden ist oder verbunden ist, sieht die Erfindung somit zur Herstellung eines leitungsgebundenen Sensors, welcher zusätzlich auch zur Füllstandserfassung ausgebildet ist, folgendes vor.

Zunächst ist sicherzustellen, dass die eingebettete Leitung 22 und das Anschlussgehäuse insgesamt gegenüber der Wand oder Decke 100, an welcher der Sensor zu befestigen ist oder befestigt ist, elektrisch isoliert wird.

Ferner wird eine elektrische Verbindung zwischen der wenigstens einen eingebetteten Leitung und der oder einer weiteren, dem Sensor zugeordneten Auswerteelektronik 25b zur Auswertung des Füllstandes hergestellt.
Ist das Anschlussgehäuse 10 elektrisch leitfähig und die wenigstens eine eingebettete Leitung 22 bereits elektrisch leitend mit dem Anschlussgehäuse 10 verbunden bzw. kontaktiert und wird das Anschlussgehäuse insgesamt gegenüber der Wand oder Decke 100 elektrisch isoliert, reicht es aus, dann wiederum nur noch das Anschlussgehäuse 10 elektrisch leitend mit der Auswerteelektronik 25b zur Auswertung des Füllstandes zu verbinden.

Um dann mittels der eingebetteten Leitung 22 eine Füllstandserfassung durchführen zu können, kann zur Bereitstellung eines Bezugspotentials für die Auswerteelektronik zur Auswertung des Füllstandes 25b entweder im Falle einer elektrisch leitfähigen Wand oder Decke 100, diese elektrisch mit der Auswerteelektronik 25b zur Auswertung des Füllstandes verbunden, so dass das Potential dieser Wand oder Decke als Bezugspotential für die Auswertung des Füllstandes herangezogen werden kann. Alternativ kann auch eine Hilfselektrode bereitgestellt werden, an welche ein Potential angelegt werden kann, so dass dieses Potential als Bezugspotential für die Auswerteelektronik zur Auswertung des Füllstandes 25b durch Herstellen einer elektrischen Verbindung zwischen der Hilfselektrode und dieser Auswerteelektronik 25b herangezogen werden kann. Die Messung des Füllstandes kann somit auf einfache Weise zwischen der Leitung 22 und der Behälterwand oder der Leitung 22 und einer Hilfselektrode und bevorzugt auf einem kapazitiven Messprinzip oder nur mit der Leitung 22 nach einem elektromagnetischen Messprinzip, z.B. Zeitbereichsreflektometrie (TDR, "Time Domain Reflectometry") durchgeführt werden. Die eingebettete Leitung 22 fungiert somit als Messelektrode. Die Behälterwand oder die Hilfselektrode stellen somit insbesondere für eine kapazitive Messung das Bezugspotential bereit gegenüber welchem je nach Füllstand Potentialänderungen erfasst werden können. Die Messung des Füllstandes nach einem elektromagnetischen Messprinzip kann hingegen bereits allein mit der Leitung 22 ohne die Nutzung der Behälterwand oder der Hilfselektrode als Bezugspotential für die Messung funktionieren.

Zur Eichung kann zunächst eine Messung ohne Füllgut und anschließend eine Messung mit vollständig gefülltem Behälter durchgeführt werden, so dass zumindest zwei Messwerte definiert sind, d.h. bei Füllstand 0% und bei Füllstand 100%. Anschließend kann je nach spezifischer Ausführung eine geeignete Skalierung und/oder Dimensionierung dazwischen liegender Füllstände vorgenommen werden.

Wie den Figuren 1 bis 4 ferner in zweckmäßiger Weiterbildung zu entnehmen ist, kann an dem anderem bzw. zweiten Ende 20b, d.h. an dem nicht im Anschlussgehäuse aufgenommenen Ende des Messkanals 20, eine Abschlusseinrichtung 27 angeordnet sein oder werden, die den Messkanal 20 und/oder die in der Ummantelung 21 eingebettete Leitung 22 gegenüber der Umgebung abschließt, insbesondere zum Schutz z.B. gegen Betauung und Feuchtigkeit, Flüssigkeiten, Staub, Schmutz, Chemikalien und/oder mechanischen Einwirkungen. Eine solche Abschlusseinrichtung 27 kann je nach spezifischer Ausführung elektrisch leitend oder auch nicht elektrisch leitend sein, z.B. metallisch oder auch nicht metallisch sein. Die Abschlusseinrichtung 27 kann auch mit der Leitung 22 verbunden sein. Ist die Abschlusseinrichtung 27 elektrisch leitend, z.B. metallisch, darf diese dann allerdings im Rahmen der Erfindung nicht mit einer elektrisch leitfähigen Behälterwand oder einem anderen elektrisch leitfähigen Teil des Behälters in elektrischen leitenden Kontakt stehen. Die Abschlusseinrichtung 27 an diesem Ende 20b kann z.B. eine Schrumpfkappe, eine Hülse, insbesondere eine verpresste Hülse, oder eine angespritzte Überdeckung sein.

### Bezugszeichenliste

- 100: Wand oder Decke
- 10: Anschlussgehäuse,
- 10a: Zusatzgehäuse,
- 12: Befestigungseinrichtung,
- 20: Messkanal,
- 20a, 20b: erstes und zweites Ende des Messkanals,
- 21: rohr- oder schlauchartige, isolierende Ummantelung,
- 22: in Ummantelung eingebettete Leitung,
- 23: Temperatur- und/oder Feuchtigkeits-Messfühler,
- 24a, 24b, 24c: elektrisch leitfähige Leitungen,
- 25a: Auswertelektronik,
- 25b: Auswerteelektronik zur Auswertung des Füllstandes,
- 26: elektrische Isolatoreinrichtung,
- 28: Durchgangsöffnung,
- 27: Abschlusseinrichtung,
- 29: Montageeinrichtung,
- 30: Schutzgehäuse.

## Patentansprüche

1. Leitungsgebundener Sensor zur Befestigung an einer Wand oder Decke (100), insbesondere eines Silos oder eines Behälters umfassend:
ein Anschlussgehäuse (10) und einen Messkanal,
wobei der Messkanal (20) eine längliche Ausdehnung mit zwei Enden (20a, 20b) besitzt, ein erstes Ende (20a) des Messkanals in dem Anschlussgehäuse aufgenommen ist und sich der Messkanal (20) ausgehend von dem ersten Ende (20a) in Richtung des anderen Endes (20b) der länglichen Ausdehnung aus dem Anschlussgehäuse heraus erstreckt, und
wobei der Messkanal (20) eine rohr- oder schlauchartige, elektrisch isolierende Ummantelung (21) mit wenigstens einer in dieser eingebetteten Leitung (22) aus elektrisch leitfähigem Material umfasst, die sich entlang der länglichen Ausdehnung des Messkanals erstreckt, und wobei im Innern der rohr- oder schlauchartigen Ummantelung (21) eine Mehrzahl von Temperatur- und/oder Feuchtigkeits-Messfühlern (23) in vorbestimmten Abständen zueinander angeordnet ist,
wobei diese Mehrzahl von Temperatur- und/oder Feuchtigkeits-Messfühlern (23) über mindestens eine elektrisch leitfähige Leitung (24) mit einer jeweiligen dem Sensor zugeordneten Auswerteelektronik (25a) verbindbar ist, und wobei auch diese wenigstens eine eingebettete Leitung (22) zur Auswertung des Füllstandes elektrisch leitend mit der oder einer weiteren, dem Sensor zugeordneten Auswerteelektronik (25b) verbindbar ist,
wobei an dem Sensor eine elektrische Isolatoreinrichtung (26) angeordnet ist, **dadurch gekennzeichnet, dass** die Isolatoreneinrichtung nicht nur die eingebettete Leitung (22), sondern auch das Anschlussgehäuse (10) insgesamt gegenüber der Decke oder Wand, an welcher der Sensor befestigbar ist, elektrisch isoliert.

2. Leitungsgebundener Sensor nach Anspruch 1, ferner **dadurch gekennzeichnet,**
**dass** im Falle einer elektrisch leitfähigen Wand oder Decke, an welcher der Sensor befestigbar ist, diese Wand oder Decke mit der Auswerteelektronik zur Auswertung des Füllstandes elektrisch kontaktierbar ist, so dass das Potential der Wand oder Decke als Bezugspotential für die verbindbare Auswerteelektronik (25b) zur Auswertung des Füllstandes verwendbar ist, oder,
**dass** insbesondere für den Fall, dass diese Wand oder Decke nicht elektrisch leitfähig ist, eine Hilfselektrode bereitgestellt ist, an welche ein Potential angelegt werden kann, welches durch elektrische Kontaktierung mit der verbindbaren Auswerteelektronik zur Auswertung des Füllstandes als Bezugspotential für die Füllstands-Auswerteelektronik (25b) verwendbar ist.

3. Leitungsgebundener Sensor nach Anspruch 1 oder 2, ferner **dadurch gekennzeichnet, dass** die rohr- oder schlauchartige Ummantelung (21) aus einem elektrisch isolierenden Kunststoff oder Gummi aufgebaut ist, und/oder dass die wenigstens eine eingebettete Leitung (22) ein Drahtgeflecht ausbildet.

4. Leitungsgebundener Sensor nach einem der Ansprüche 1, 2 oder 3, **dadurch gekennzeichnet, dass** das Anschlussgehäuse (10) elektrisch leitfähig ist.

5. Leitungsgebundener Sensor nach Anspruch 4, ferner
**dadurch gekennzeichnet, dass** die wenigstens eine eingebettete Leitung (22) elektrisch leitend mit dem Anschlussgehäuse (10) und dieses wiederum elektrisch leitend mit der Auswerteelektronik (25b) zur Auswertung des Füllstandes verbunden ist.

6. Leitungsgebundener Sensor nach einem der Ansprüche 1 bis 5, ferner **dadurch gekennzeichnet, dass** die Auswerteelektronik (25a) zur Auswertung der Temperatur und/oder der Feuchtigkeit und/oder die Auswerteelektronik (25b) zur Auswertung des Füllstandes einen Teil des Sensors bildet, insbesondere innerhalb des Anschlussgehäuses angeordnet ist, oder eine in Bezug auf den Sensor externe Komponente ist.

7. Leitungsgebundener Sensor nach einem der Ansprüche 1 bis 6, ferner **dadurch gekennzeichnet, dass** die Temperatur- und/oder Feuchtigkeits-Messfühler (23)
- passive Messfühler sind, und/oder
- in Reihen- oder Parallelschaltung mit der Auswerteelektronik (25a) zu verbinden bzw. verbunden sind.

8. Leitungsgebundener Sensor nach einem der Ansprüche 1 bis 7, ferner **dadurch gekennzeichnet, dass** die wenigstens eine eingebettete Leitung (22) als Messelektrode für eine auf einem vorbestimmten Messprinzip arbeitende Füllstandsmessung fungiert, insbesondere für eine auf einem kapazitiven oder elektromagnetischem Messprinzip arbeitende Füllstandsmessung.

9. Verfahren zur Herstellung eines leitungsgebundenen Sensors, zumindest nach Anspruch 1,
**dadurch gekennzeichnet, dass** aufbauend auf einem leitungsgebundenen Sensor zur Befestigung an einer Wand oder Decke (100), insbesondere eines Silos oder eines Behälters, und unter Verwendung dieses Sensors, der ein Anschlussgehäuse (10) und einen Messkanal (20) mit einer länglichen Ausdehnung mit zwei Enden (20a, 20b) besitzt, wobei ein erstes Ende (20a) des Messkanals (20) in dem Anschlussgehäuse aufgenommen ist, sich der Messkanal (20) ausgehend von dem ersten Ende (20a) in Richtung des anderen Endes (20b) der länglichen Ausdehnung aus dem Gehäuse heraus erstreckt und der Messkanal (20) eine rohr- oder schlauchartige, elektrisch isolierende Ummantelung (21) mit wenigstens einer in dieser eingebetteten Leitung (22) aus elektrisch leitfähigem Material umfasst, die sich entlang der länglichen Ausdehnung des Messkanals erstreckt, und wobei im Innern der rohr- oder schlauchartigen Ummantelung (21) eine Mehrzahl von Temperatur- und/oder Feuchtigkeits-Messfühlern (23) in vorbestimmten Abständen zueinander angeordnet ist, wobei diese Mehrzahl von Temperatur- bzw. Feuchtigkeits-Messfühlern (23) über mindestens eine elektrisch leitfähige Leitung (24) mit einer dem Sensor zugeordneten Auswerteelektronik (25a) zu verbinden ist oder verbunden ist, folgende Schritte umfasst sind:
- elektrisches Isolieren der eingebetteten Leitung (22) und des Anschlussgehäuses (10) insgesamt gegenüber der Wand oder Decke (100), an welcher der Sensor zu befestigen ist oder befestigt ist, und
- Herstellen einer elektrischen Verbindung zwischen der wenigstens einen eingebetteten Leitung (22) und der oder einer weiteren, dem Sensor zugeordneten Auswerteelektronik (25b) zur Auswertung des Füllstandes.

10. Verfahren zur Herstellung eines leitungsgebundenen Sensors nach Anspruch 9, welches ferner einer der folgenden Schritt umfasst:
- Herstellen einer elektrischen Verbindung zwischen der Wand oder Decke, an welcher der Sensor zu befestigen ist oder befestigt ist, und der Auswerteelektronik (25b) zur Auswertung des Füllstandes zur Verwendung des Potentials dieser Wand oder Decke als Bezugspotential für die Auswertung des Füllstandes oder
- Bereitstellen einer Hilfselektrode, an welche ein Potential angelegt werden kann, zur Verwendung dieses Potentials als Bezugspotential für die Auswerteelektronik zur Auswertung des Füllstandes (25b) durch Herstellen einer elektrischen Verbindung zwischen der Hilfselektrode und dieser Auswerteelektronik (25b).

11. Verfahren nach Anspruch 9 oder 10, **dadurch gekennzeichnet, dass** das Anschlussgehäuse (10) elektrisch leitfähig ist und die wenigstens eine eingebettete Leitung (22) elektrisch leitend mit dem Anschlussgehäuse (10) verbunden ist, wobei das Anschlussgehäuse (10) elektrisch leitend mit der Auswerteelektronik (25b) zur Auswertung des Füllstandes verbunden wird.

## Claims

1. A wired sensor for being attached to a wall or ceiling (100), in particular of a silo or a container, comprising:
a connection housing (10) and a measurement channel, the measurement channel (20) having an elongated extension with two ends (20a, 20b), a first end (20a) of the measurement channel being accommodated in the connection housing, and the measurement channel (20) extending from the first end (20a) out of the connection housing towards the other end (20b) of the elongated extension; and
wherein the measurement channel (20) has a tubular or tube-like electrically insulating sheath (21) with at least one line (22) of electrically conductive material embedded therein, which extends along the elongated extension of the measurement channel, and wherein a plurality of temperature and/or humidity sensing elements (23) are arranged inside the tubular or tube-like sheath (21) at predetermined distances from each other, said plurality of temperature and/or humidity sensing elements (23) being connectable to a respective electronic evaluation unit (25a) associated with the sensor via at least one electrically conductive line (24); and
wherein said at least one embedded line (22) is also connectable to said or a further electronic evaluation unit (25b) associated with the sensor for evaluating a filling level;
wherein an electrical insulating means (26) is arranged on the sensor;
**characterized in that** the insulating means electrically insulates not only the embedded line (22) but also the connection housing (10) as a whole with respect to the ceiling or wall on which the sensor can be attached.

2. The wired sensor according to claim 1, further **characterized in that** in the case of an electrically conductive wall or ceiling to which the sensor can be attached, this wall or ceiling is electrically connectable with the electronic evaluation unit (25b) for evaluating the filling level, so that the potential of the wall or ceiling can be used as a reference potential for the connectable electronic evaluation unit (25b) for evaluating the filling level; or
that in particular for the case that said wall or ceiling is not electrically conductive, an auxiliary electrode is provided to which a potential can be applied, which can be used, through electrical connection to the connectable electronic evaluation unit (25b), as a reference potential for the filling level electronic evaluation unit (25b) for evaluating the filling level.

3. The wired sensor according to claim 1 or 2, further **characterized in that** the tubular or tube-like sheath (21) is made of an electrically insulating plastic material or rubber; and/or that the at least one embedded line (22) forms a wire mesh.

4. The wired sensor according to any one of claims 1, 2, or 3, **characterized in that** the connection housing (10) is electrically conductive.

5. The wired sensor according to claim 4, further **characterized in that** the at least one embedded line (22) is connected to the connection housing (10) in electrically conductive manner, and that the latter in turn is connected to the electronic evaluation unit (25b) for evaluating the filling level in electrically conductive manner.

6. The wired sensor according to any one of claims 1 to 5, further **characterized in that** the electronic evaluation unit (25a) for evaluating temperature and/or humidity and/or the electronic evaluation unit (25b) for evaluating the filling level form(s) part of the sensor, in particular is/are disposed within the connection housing, or constitute(s) an external component with respect to the sensor.

7. The wired sensor according to any one of claims 1 to 6, further **characterized in that** the temperature and/or humidity sensing elements (23)
- are passive sensing elements; and/or
- are intended for being connected or are connected in series or in parallel with the electronic evaluation unit (25a).

8. The wired sensor according to any one of claims 1 to 7, further **characterized in that** the at least one embedded line (22) functions as a measuring electrode for a filling level measurement operating based on a predetermined measuring principle, in particular for a filling level measurement operating based on a capacitive or electromagnetic measuring principle.

9. A method for producing a wired sensor, at least according to claim 1,
**characterized in that** based on a wired sensor for being attached to a wall or ceiling (100), in particular of a silo or a container, and by using said sensor which comprises a connection housing (10) and a measurement channel (20) having an elongated extension with two ends (20a, 20b), wherein a first end (20a) of the measurement channel (20) is accommodated in the connection housing, the measurement channel (20) extends from the first end (20a) toward the other end (20b) of the elongated extension out of the connection housing, and the measurement channel (20) has a tubular or tube-like electrically insulating sheath (21) with at least one line (22) of electrically conductive material embedded therein, which extends along the elongated extension of the measurement channel, and wherein a plurality of temperature and/or humidity sensing elements (23) are arranged inside the tubular or tube-like sheath (21) at predetermined distances from each other, wherein said plurality of temperature and/or humidity sensing elements (23) are intended to be or are connected to a respective electronic evaluation unit (25a) associated with the sensor, via at least one electrically conductive line (24), the method comprises the steps of:
- electrically insulating the embedded line (22) and the connection housing (10) as a whole against the wall or ceiling (100) to which the sensor is intended to be attached or is attached; and
- establishing an electrical connection between the at least one embedded line (22) and said or a further electronic evaluation unit (25b) associated with the sensor, for evaluating the filling level.

10. The method for producing a wired sensor according to claim 9, further comprising one of the following steps:
- establishing an electrical connection between the wall or ceiling to which the sensor is intended to be attached or is attached and the electronic evaluation unit (25b) for evaluating the filling level, for using the potential of said wall or ceiling as a reference potential for the evaluation of the filling level; or
- providing an auxiliary electrode to which a potential can be applied, for using this potential as a reference potential for the electronic evaluation unit (25b) for evaluating the filling level by establishing an electrical connection between said auxiliary electrode and said electronic evaluation unit (25b).

11. The method according to claim 9 or 10, **characterized in that** the connection housing (10) is electrically conductive and the at least one embedded line (22) is connected to the connection housing (10) in electrically conductive manner, wherein the connection housing (10) is connected to the electronic evaluation unit (25b) for evaluating the filling level in electrically conductive manner.

## Revendications

1. Capteur filaire destiné à être fixé à un mur ou à un plafond (100), en particulier d'un silo ou d'un contenant, comportant :
un boîtier de connexion (10) et un canal de mesure,
dans lequel le canal de mesure (20) possède une étendue allongée présentant deux extrémités (20a, 20b), une première extrémité (20a) du canal de mesure est logée dans le boîtier de connexion et le canal de mesure (20) s'étend à partir de la première extrémité (20a) en direction de l'autre extrémité (20b) de l'étendue allongée à l'extérieur du boîtier de connexion, et
dans lequel le canal de mesure (20) comporte une gaine (21) du type tube ou tuyau flexible et électriquement isolante, dans laquelle est insérée au moins une ligne (22) en matériau électro-conducteur, qui s'étend le long de l'étendue allongée du canal de mesure, et dans lequel une pluralité de capteurs de mesure de température et/ou d'humidité (23) sont agencés à intervalles prédéfinis les uns par rapport aux autres à l'intérieur de la gaine (21) du type tube ou tuyau flexible,
dans lequel cette pluralité de capteurs de mesure de température et/ou d'humidité (23) peuvent être reliés à une électronique d'évaluation (25a) respective associée au capteur par l'intermédiaire d'au moins une ligne (24) électro-conductrice, et dans lequel cette au moins une ligne (22) insérée peut également être reliée de manière électro-conductrice à la ou à une autre électronique d'évaluation (25b) associée au capteur pour l'évaluation du niveau de remplissage, dans lequel un dispositif isolateur électrique (26) est agencé sur le capteur, **caractérisé en ce que** le dispositif isolateur isole électriquement non seulement la ligne (22) insérée, mais également le boîtier de connexion (10) dans son ensemble vis-à-vis du plafond ou du mur auquel le capteur peut être fixé.

2. Capteur filaire selon la revendication 1, **caractérisé en outre :**
**en ce que**, dans le cas d'un mur ou d'un plafond électro-conducteur auquel le capteur peut être fixé, ce mur ou plafond peut être mis en contact électrique avec l'électronique d'évaluation destinée à évaluer le niveau de remplissage, de sorte que le potentiel du mur ou du plafond peut être utilisé comme potentiel de référence pour l'électronique d'évaluation (25b) pouvant être reliée destinée à évaluer le niveau de remplissage, ou,
**en ce que**, en particulier au cas où ce mur ou ce plafond ne serait pas électro-conducteur, une électrode auxiliaire est fournie, contre laquelle un potentiel peut être appliqué, lequel peut être utilisé, à la suite d'une mise en contact électrique avec l'électronique d'évaluation pouvant être reliée destinée à évaluer le niveau de remplissage, comme potentiel de référence pour l'électronique d'évaluation de niveau de remplissage (25b).

3. Capteur filaire selon la revendication 1 ou 2, **caractérisé en outre en ce que** la gaine du type tube ou tuyau flexible (21) est composée d'une matière plastique ou d'un caoutchouc électriquement isolant(e), et/ou **en ce que** l'au moins une ligne (22) insérée forme un treillis métallique.

4. Capteur filaire selon l'une quelconque des revendications 1, 2 ou 3, **caractérisé en ce que** le boîtier de connexion (10) est électro-conducteur.

5. Capteur filaire selon la revendication 4, **caractérisé en outre en ce que** l'au moins une ligne (22) insérée est reliée de manière électro-conductrice au boîtier de connexion (10) et celui-ci est relié lui-même de manière électro-conductrice à l'électronique d'évaluation (25b) destinée à évaluer le niveau de remplissage.

6. Capteur filaire selon l'une quelconque des revendications 1 à 5, **caractérisé en outre en ce que** l'électronique d'évaluation (25a) destinée à évaluer la température et/ou l'humidité et/ou l'électronique d'évaluation (25b) destinée à évaluer le niveau de remplissage forment une partie du capteur, sont en particulier agencées à l'intérieur du boîtier de connexion, ou sont un composant externe par rapport au capteur.

7. Capteur filaire selon l'une quelconque des revendications 1 à 6, **caractérisé en outre en ce que** les capteurs de mesure de température et/ou d'humidité (23)
- sont des capteurs de mesure passifs, et/ou
- sont à relier ou sont reliés à l'électronique d'évaluation (25a) en montage en série ou en parallèle.

8. Capteur filaire selon l'une quelconque des revendications 1 à 7, **caractérisé en outre en ce que** l'au moins une ligne (22) insérée fonctionne comme une électrode de mesure pour une mesure du niveau de remplissage fonctionnant selon un principe de mesure prédéfini, en particulier pour une mesure du niveau de remplissage fonctionnant selon un principe de mesure capacitive ou électromagnétique.

9. Procédé de fabrication d'un capteur filaire, au moins selon la revendication 1,
**caractérisé en ce qu'**en se basant sur un capteur filaire destiné à être fixé à un mur ou à un plafond (100), en particulier d'un silo ou d'un contenant, et au moyen de ce capteur, qui possède un boîtier de connexion (10) et un canal de mesure (20) comprenant une étendue allongée présentant deux extrémités (20a, 20b), dans lequel une première extrémité (20a) du canal de mesure (20) est logée dans le boîtier de connexion, le canal de mesure (20) s'étend à partir de la première extrémité (20a) en direction de l'autre extrémité (20b) de l'étendue allongée à l'extérieur du boîtier et le canal de mesure (20) comporte une gaine (21) du type tube ou tuyau flexible et électriquement isolante, dans laquelle est insérée au moins une ligne (22) en matériau électro-conducteur, qui s'étend le long de l'étendue allongée du canal de mesure, et dans lequel une pluralité de capteurs de mesure de température et/ou d'humidité (23) sont agencés à intervalles prédéfinis les uns par rapport aux autres à l'intérieur de la gaine (21) du type tube ou tuyau flexible, dans lequel cette pluralité de capteurs de mesure de température ou d'humidité (23) sont à relier ou peuvent être reliés à une électronique d'évaluation (25a) associée au capteur par l'intermédiaire d'au moins une ligne (24) électro-conductrice, les étapes suivantes sont comprises :
- l'isolation électrique de la ligne (22) insérée et du boîtier de connexion (10) dans leur ensemble vis-à-vis du mur ou du plafond (100) auquel le capteur est à fixer ou est fixé, et
- l'établissement d'une liaison électrique entre l'au moins une liaison (22) insérée et la ou une autre électronique d'évaluation (25b) associée au capteur destinée à évaluer le niveau de remplissage.

10. Procédé de fabrication d'un capteur filaire selon la revendication 9, lequel comporte en outre une des étapes suivantes :
- l'établissement d'une liaison électrique entre le mur ou le plafond auquel le capteur est à fixer ou est fixé, et l'électronique d'évaluation (25b) destinée à évaluer le niveau de remplissage pour utiliser le potentiel de ce mur ou de ce plafond comme potentiel de référence pour l'évaluation du niveau de remplissage ou
- la fourniture d'une électrode auxiliaire, contre laquelle un potentiel peut être appliqué, pour utiliser ce potentiel comme potentiel de référence pour l'électronique d'évaluation destinée à évaluer le niveau de remplissage (25b) à la suite de l'établissement d'une liaison électrique entre l'électrode auxiliaire et cette électronique d'évaluation (25b).

11. Procédé selon la revendication 9 ou 10, **caractérisé en ce que** le boîtier de connexion (10) est électro-conducteur et l'au moins une ligne (22) insérée est reliée de manière électro-conductrice au boîtier de connexion (10), dans lequel le boîtier de connexion (10) est relié de manière électro-conductrice à l'électronique d'évaluation (25b) destinée à évaluer le niveau de remplissage.
